# EUROPÄISCHE PATENTSCHRIFT

(11) **EP 1 673 295 B1**
(45) Veröffentlichungstag und Bekanntmachung des Hinweises auf die Patenterteilung: **12.03.2008**
(21) Anmeldenummer: 04765738.2
(22) Anmeldetag: 01.10.2004
(51) Int. Cl.: B65G 1/00

(54) **VORRICHTUNG ZUM PALETTIEREN**
PALLETIZING DEVICE
DISPOSITIF DE PALETTISATION

(30) Priorität: 14.10.2003 DE 10348431
(43) Veröffentlichungstag der Anmeldung: 28.06.2006
(73) Patentinhaber: KRONES AG, 93073 Neutraubling (DE)
(72) Erfinder: KAISER, Alexander, 94369 Rain (DE); HAUPT, Johann, 85356 Freising (DE)
(86) Internationale Anmeldenummer: PCT/EP2004/010968
(87) Internationale Veröffentlichungsnummer: WO 2005/037685

(56) Entgegenhaltungen:
- EP-A- 1 073 598
- DE-A- 3 007 104
- DE-A- 19 535 907
- FR-A- 2 147 004

## Beschreibung

Die Erfindung bezieht sich auf eine Vorrichtung zum Palettieren der im Oberbegriff von Anspruch 1 erläuterten Art.

Eine derartige vorrichtung ist beispielsweise aus der EP 1 073 598 bekannt. Die bekannte Palettiervorrichtung enthält eine Förderstrecke für zu palettierende Gegenstände, nämlich Flaschen, die von einer Anliefereinrichtung zu einem Palettenbelader führt. Die Flaschen werden von einem Flaschenerzeuger in eine Sammel- und Umsetzeinrichtung gefördert, wo sie gruppiert und als Gruppe bzw. Palettierlage in einem Zwischenträger untergebracht werden. Die mit Flaschen gefüllten Zwischenträger gelangen dann über eine Förderstrecke zum Palettenbelader, wo sie, mit oder ohne Zwischenträger, lagenweise auf einer Palette gestapelt werden. Zwischen der Sammel- und Umsetzeinrichtung und dem Palettenbelader befinden sich Eingaben und Ausgaben, die in ein Zwischenlager für beladene Zwischenträger führen. Das Zwischenlager ist mit einem Regalförderzeug versehen, das die beladenen zwischenträger in die Regale des Zwischenlagers verbringt und zum Wiedereinschleusen in die Förderstrecke aus den Regalen holt. Eine solche Vorrichtung ist relativ kompliziert und rentiert sich nur dort, wo große Mengen an Gegenständen ggf. für längere Zeit zwischengelagert werden müssen.

Eine Palettiervorrichtung mit einem ähnlichen Zwischenlager ist aus dem DE-U-299 13 237 bekannt. Das Zwischenlager dieser Fördervorrichtung wird einerseits durch eine entsprechend dimensionierte Gruppiereinrichtung zum Zusammenstellen von Gegenständen zu Gruppen und zum Ansammeln dieser Gruppen auf Zwischenträgern oder Trays gebildet. Zum anderen ist ein weiteres Lager mit größerer Kapazität vorgesehen, das von der Gruppiereinrichtung beschickt wird. Das Ein- und Ausschleusen von Gegenständen erfolgt an unterschiedlichen Abzweigstellen der Förderstrecke, die bis zum Palettenbelader durchläuft.

Schließlich zeigt die DE-A-32 35 223 eine Vorrichtung zum Transportieren von Gebinden, beispielsweise von Flaschenkästen, durch Behandlungsstationen, zwischen denen an unterschiedlichen Stellen in der Förderstrecke Puffermagazine vorgesehen sind, in denen die Gebinde, in Zwischenträgern aufgenommen, aus der Förderstrecke heraus nach oben angehoben werden, so dass nachfolgende Zwischenträger durchlaufen können.

Der Erfindung liegt die Aufgabe zugrunde, eine Vorrichtung zum Palettieren von Gegenständen zu schaffen, die mit einer konstruktiv einfachen und wirksamen Puffereinrichtung versehen ist.

Diese Aufgabe wird erfindungsgemäß durch die Merkmale des Anspruchs 1 gelöst.

Bei einer erfindungsgemäßen Palettiervorrichtung sind aufgrund der "Doppelfunktion" von Umsetzer und Palettenbelader, die sowohl mit der normalen Förderstrecke als auch mit dem Puffer direkt zusammenarbeiten, keine speziellen Eingabe- und Ausgabevorrichtungen für den Puffer erforderlich. Es ergibt sich daher ein funktionssicherer, kompakter und kostengünstiger Aufbau.

Vorteilhafte Weiterbildungen der Erfindung sind in den Unteransprüchen enthalten.

Im Nachstehenden wird ein Ausführungsbeispiel der Erfindung anhand der Zeichnungen beschrieben. Es zeigt:
- Fig.1: die schematische Draufsicht auf eine Palettiervorrichtung
- Fig.2: die schematische Seitenansicht der Palettiervorrichtung nach Fig.1
- Fig.3: die Einzelheit A aus Fig.2 in vergrößerter Darstellung
- Fig.4: die schematische Seitenansicht des Palettenbeladers nach Fig. 1 und 2
- Fig.5: die schematische Draufsicht der Verteilvorrichtung
- Fig. 6: die schematische Draufsicht einer Variante der Verteilvorrichtung
- Fig. 7: die vergrößerte Draufsicht auf einen Teil einer Förderkette nach Fig. 6
- Fig. 8: den Schnitt A B nach Fig. 7.

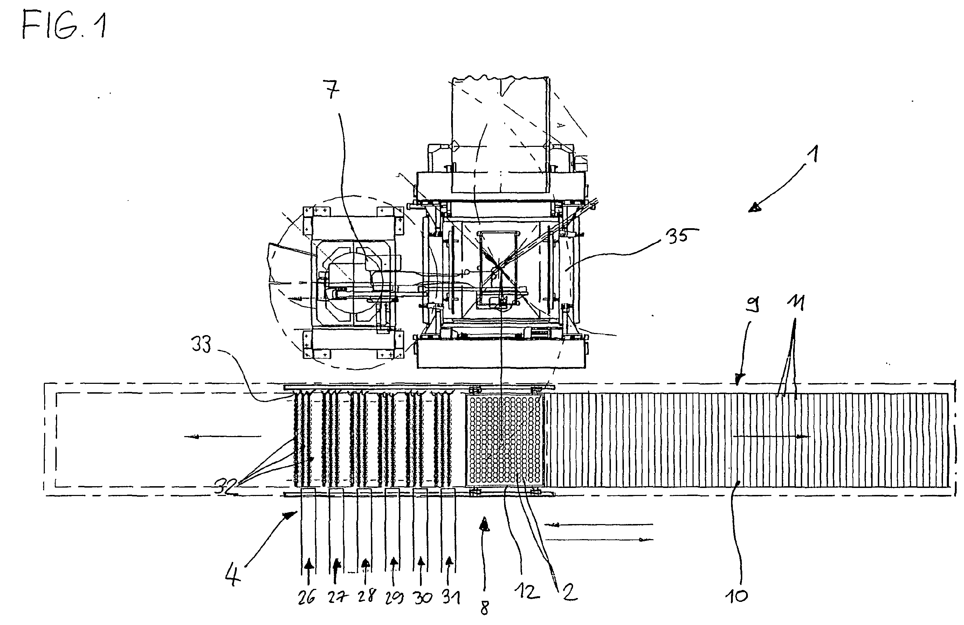

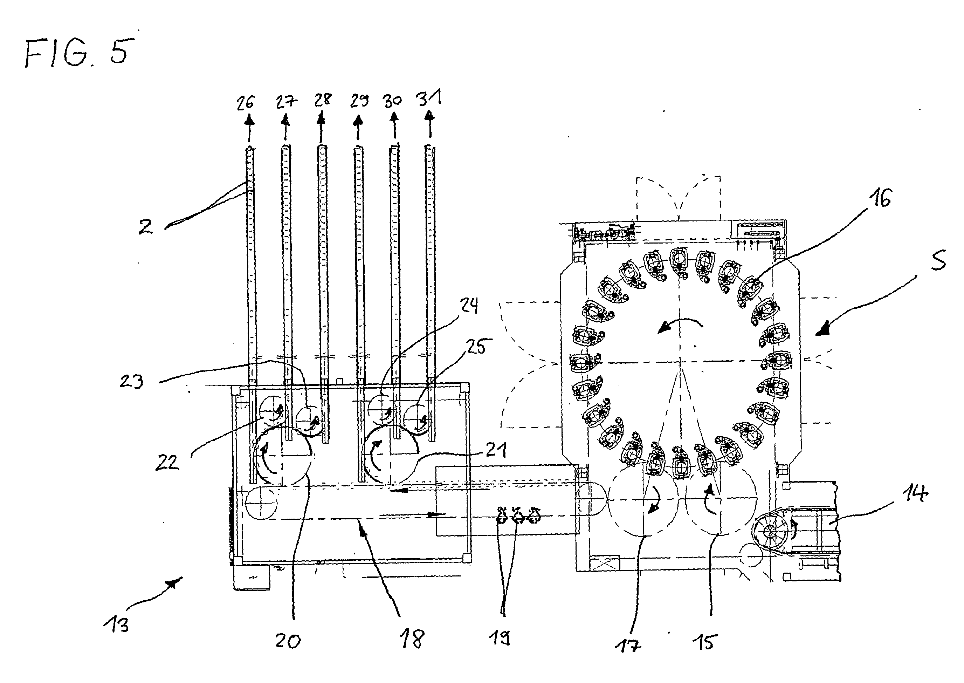

Die Vorrichtung 1 nach den Figuren 1 bis 5 ist zum Palettieren von leeren PET-Flaschen mit einem Halskragen 3, im Nachstehenden kurz Flaschen 2 genannt, im Anschluß an deren Herstellung in einer Streckblasmaschine S herkömmlicher Bauart eingerichtet. Sie umfaßt im wesentlichen einen Verteiler 13, einen Umsetzer 4, eine normale Förderstrecke 8, einen parallel dazu angeordneten Puffer 9 und einen Palettenbelader 7.

Die Streckblasmaschine S ist mit einem Linearofen 14, einem Transferstern 15, einem Blasrad 16 und einem Auslaufstern 17 ausgestattet. Diese Elemente werden in Pfeilrichtung kontinuierlich angetrieben, wobei aus dem Auslaufstern 17 beispielsweise 50.000 Flaschen 2 pro Stunde in einer Reihe auslaufen.

Der Verteiler 13 weist eine endlose Förderkette 18 auf, die unmittelbar mit dem Auslaufstern 17 der Streckblasmaschine S zusammenarbeitet. Die Förderkette 18 ist am Umfang gleichmäßig mit elastischen Greifzangen 19 bestückt, welche die frisch geblasenen Flaschen 2 von den gesteuerten, nicht gezeigten Greifzangen des Auslaufsterns 17 einzeln nacheinander entnehmen. Die Förderkette 18 ist synchron zum Auslaufstern 17 in Pfeilrichtung angetrieben und arbeitet mit zwei synchron zu ihr umlaufenden Klammersternen 20 und 21 zusammen, welche jede zweite Flasche 2 von der Förderkette 18 abnehmen. Die Klammersterne 20, 21 sind mit nicht gezeigten steuerbaren Greifern versehen. Jedem Klammerstern 20, 21 sind wiederum jeweils zwei synchron antreibbare Klammersterne 22, 23 bzw. 24, 25 zugeordnet und bewirken zusammen mit den direkt aus den Klammersternen 20, 21 auslaufenden Flaschen 2 eine verteilung auf insgesamt sechs Bahnen 26 bis 31. Diese sind z.B. als Luftförderer oder Förderbänder ausgebildet und führen die Flaschen 2 in etwa mit einem Sechstel der ursprünglichen Geschwindigkeit dem Umsetzer 4 zu. Der Aufbau der Klammersterne 20 bis 25 ist im europäischen Patent EP 726 216 B2 ausführlich beschrieben. Der Verteiler 13 ermöglicht auf kurzem Wege auch bei höchsten Leistungen eine störungsfreie Aufteilung der einreihig zugeführten Flaschen 2 auf eine gewünschte Anzahl von Reihen und ist auch für andere Einsatzfälle geeignet.

Im Umsetzer 4 wird aus dem sechsbahnig zugeführten Strom von Flaschen 2 eine vollständige Palettierlage 5 von z.B. zwölf Reihen mit jeweils achtzehn Flaschen 2 gebildet. Hierzu ist der Umsetzer 4 mit sechs Gruppen von jeweils drei Leistengreifern 32 versehen, die mittels einer Antriebseinrichtung 39 gemeinsam vertikal und horizontal sowie gruppenweise in horizontaler Richtung relativ zueinander verfahrbar sind. Die steuerbaren Leistengreifer 32 bilden eine Art Führungskanal, der die Flaschen unterhalb des Halskragens 3 hält oder freigibt und sind an den von den Bahnen 26 bis 31 abgewandten Enden mit versetzten Anschlägen 33 versehen. Die Bahnen 26 bis 31 sind an ihrem Ende mit steuerbaren, nicht gezeigten Sperren versehen. Sind diese geöffnet, so werden aus den Bahnen 26 bis 31 jeweils achtzehn Flaschen 2 abgezählt und durch Luftdruck oder dergleichen direkt in die gerade vor den Bahnen stehenden sechs Leistengreifern 32 eingeschoben. Danach wird die Gesamtheit der Leistengreifer 32 um eine Flaschenbreite verschoben und eine weitere Flaschenreihe eingeführt. Das gleiche Spiel wird nochmals wiederholt, so dass letztendlich alle achtzehn Leistengreifer 32 mit der gewünschten Anzahl von Flaschen 2 gefüllt sind.

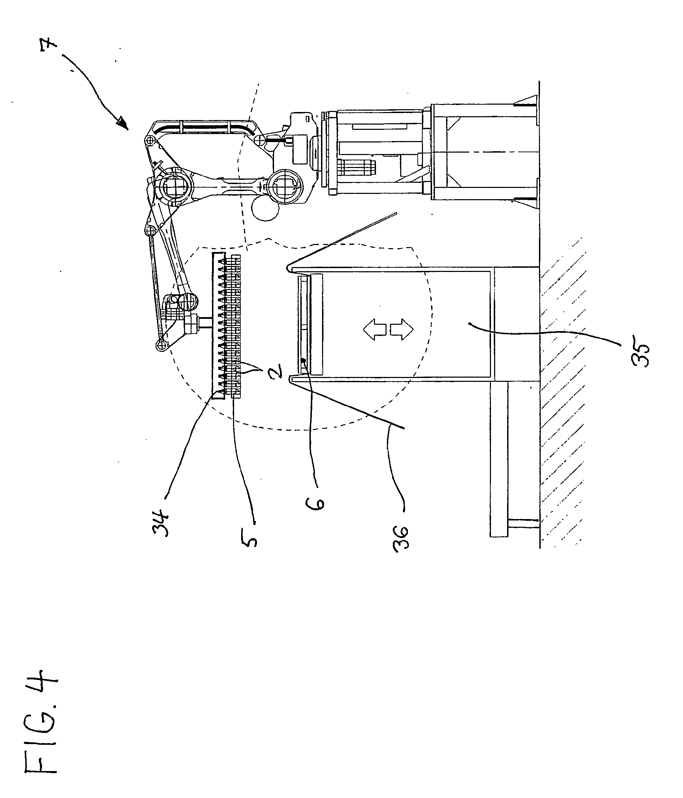

Der Palettenbelader 7 basiert auf einem Roboter und weist einen üblichen Greifkopf 34 für eine Lage 5 aus Flaschen 2 auf. Dem Palettenbelader 7 ist ein Hubwerk 35 für die zu beladende Palette 6 zugeordnet, das seitlich Führungen für die Palette 6 sowie einen nicht gezeigten Einleger für einen Sicherungsstreifen 36 aufweist. Der Palettenbelader 7 nimmt die vom Umsetzer 4 zusammengestellten Lagen 5 nacheinander an einem Aufnahmeplatz auf und setzt sie auf der Palette bzw. der dort bereits befindlichen Lage 5 ab, wobei die Palette 6 schrittweise nach unten bewegt wird, bis die gewünschte Anzahl von Lagen auf der Palette 6 steht. Dabei wird gleichzeitig der Sicherungsstreifen 36 an den Stapel angelegt und am Schluß an der Oberseite der letzten Lage 5 miteinander verbunden bzw. befestigt. Danach wird die befüllte Palette 6 aus dem Hubwerk 35 heraus gefahren und es wird aus einem nicht gezeigten Palettenmagazin eine neue leere Palette 6 eingesetzt und in die in Figur 4 gezeigte obere Endposition gehoben. Während dieser Zeit des sogenannten Palettenwechsels kann keine Palettierung stattfinden.

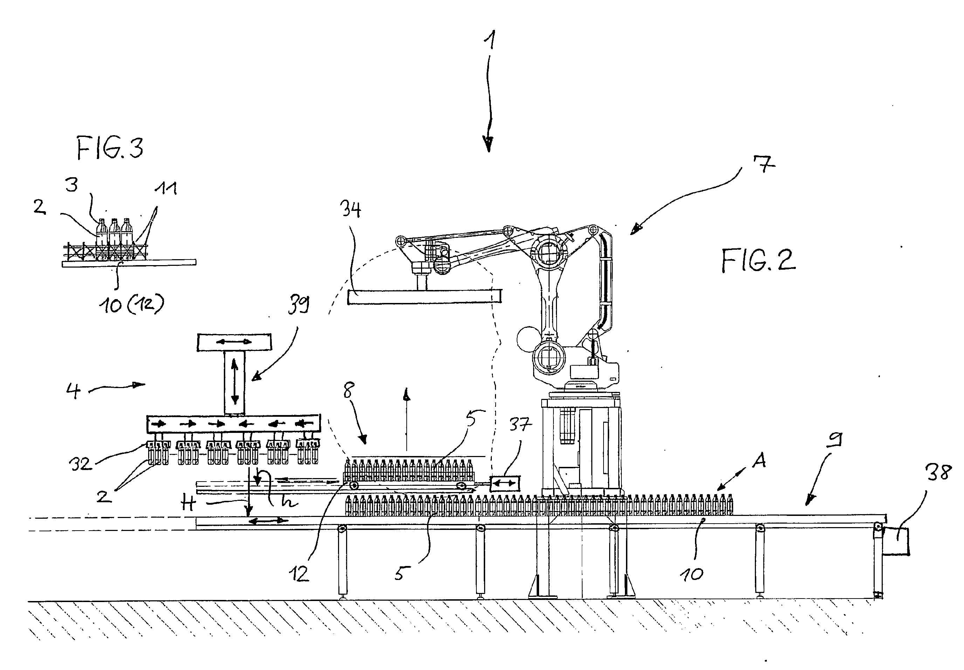

Zwischen dem Umsetzer 4 und dem Palettenbelader 7, genauer gesagt zwischen dem normalen Absetzplatz des Umsetzers 4 und dem normalen Aufnahmeplatz des Palettenbeladers 7 ist eine kurze Förderstrecke 8 mit einem Schubtisch 12 angeordnet. Der eine komplette Lage 5 aufnehmende Schubtisch 12 ist durch einen Stellmotor 37 in horizontaler Richtung zwischen zwei Endpositionen verfahrbar. In der rechten Endposition, die in Figur 2 in vollen Linien gezeichnet ist, befindet er sich am normalen Aufnahmeplatz des Palettenbeladers 7 bzw. er definiert diesen. In der linken Endposition, die unmittelbar daneben liegt und in Figur 2 gestrichelt angedeutet ist, steht der Schubtisch 12 unter den Leistengreifern 32 des Umsetzers 4 in dessen normalem Absetzplatz bzw. er definiert diesen.

Während des Beladens einer Palette 6 fährt der Schubtisch 12 zwischen dem Absetzplatz des Umsetzers 4 und dem Aufnahmeplatz des Palettenbeladers 7 hin und her und transportiert dabei jeweils eine palettierbereite Lage 5 vom Umsetzer zum Palettierer 7, wo sie durch dessen Greifkopf 34 abgenommen wird. Dabei gibt es keinen Zeitverlust, da während des Aufsetzens einer Lage 5 auf die Palette 6 der Umsetzer 4 in der vorbeschriebenen Weise in drei Arbeitstakten eine neue Lage 5 bildet, komprimiert und auf den Schubtisch 12 in seiner linken Endposition absetzen kann. Erforderlichenfalls ist der Greifkopf 34 des Palettenbeladers 7 in bekannter Weise derart ausgebildet, dass er während des Umsetzens einer Lage 5 deren Reihen so aneinander annähert, dass sich eine geschlossenen "Kugelpackung" der Flaschen 2 bildet. Dieser Vorgang kann auch im Umsetzer 4 durch entsprechende Relativbewegung der Leistengreifer 25 ganz oder teilweise erfolgen.

Unter der Förderstrecke 8 ist ein Puffer 9 zum Zwischenspeichern mehrerer Lagen 5, insbesondere während der durch einen Palettenwechsel bedingten Stillstandszeit des Palettenbeladers 7, angeordnet. Der Puffer 9 weist einen tischförmigen Schlitten 10 auf, auf den mehrere Lagen 5 nebeneinander abgestellt werden können. Der Schlitten 10 ist wie der Schubtisch 12 horizontal hin- und herverfahrbar, jedoch in einer tieferen Ebene mit einem Höhenabstand von etwas mehr als der maximalen Flaschenhöhe. Der reversierende Antrieb des Schlittens 10 erfolgt durch einen Motor 38 über nicht gezeigte Getriebeelemente, wie. Zahnstangen, endlose Zugmittel, Spindeln oder dergleichen.

Die Bewegungsbahn des Schlittens 10 verläuft somit mit geringem Abstand unter dem normalen Abstellplatz des Umsetzers 4 und dem normalen Aufnahmeplatz des Palettenbeladers 7. Der Puffer 9 ist damit wirkungsmäßig der Förderstrecke 8 parallel geschaltet.

Das Beladen des Puffers 9 erfolgt durch den Umsetzer 4 in ähnlicher Weise wie das Beladen des Schubtisches 12 indem die Leistengreifer 32 des Umsetzers 4 nach dem Sammeln einer kompletten Lage 5 gegenüber dem normalen Absetzhub, angedeutet durch den Pfeil h, einen längeren Absetzhub, angedeutet durch den Pfeil H, ausführen und dabei eine komplette Lage 5 auf dem stillstehenden Schlitten 10 absetzen. Der Schubtisch 12 nimmt hierbei seine rechte Endposition ein. Dabei werden die Flaschenreihen zwischen quer zur Bewegungsrichtung des Schlittens 10 verstellbar angeordnete Stützen 11 in Form von schmalen Leisten oder dergleichen eingestellt, um ein sicheres Fixieren während des Verbleibens im Puffer und während der Entnahme zu realisieren. Auch der Schubtisch 12 kann mit entsprechenden Stützen 11 versehen werden.

Das Entladen des Puffers 9 erfolgt durch den Palettenbelader 7, indem dessen Greifkopf 34 tiefer als normal abgesenkt wird, entsprechend der Höhendifferenz zwischen der Förderbahn 8 und dem Puffer 9. Es sind somit weder für das Beladen noch für das Entladen des Puffers 9 zusätzliche Einrichtungen erforderlich, der zusätzliche Hub (H minus h) lässt sich ausschließlich durch entsprechende Steuerungen der Antriebe für die Leistengreifer 32 bzw. den Greifkopf 34 realisieren.

Die Funktion der vorbeschriebenen vorrichtung 1 ist folgende: bei Betriebsbeginn, nach Anheben einer leeren Palette 6 in der Hubeinrichtung 35 auf die in Figur 4 gezeigte Ausgangslage und nach Inbetriebnahme der Streckblasmaschine S werden die von dieser produzierten Flaschen 2 im Verteiler 13 auf sechs Bahnen aufgeteilt, dem Umsetzer 4 zugeführt, von diesem während dreier Arbeitstakte zu einer kompletten Lage 5 zusammen geführt und durch absenken der Leistengreifer 32 (Hub h) auf dem Schubtisch 12 abgesetzt, während dieser in seiner linken Endposition steht. Daraufhin wird der Schubtisch 12 nach rechts zum normalen Aufnahmeplatz des Palettenbeladers 7 verfahren, wonach die jeweilige Lage 5 vom Greifkopf 34 des Palettenbeladers 7 erfasst, gegebenenfalls formiert und auf der Palette 6 bzw. der darauf befindlichen Lage 5 abgestellt wird. Dieses Arbeitsspiel wiederholt sich so oft, bis sich die gewünschte Anzahl von Lagen auf der Palette 6 befindet. Während dieses Vorgangs ist nur die Förderstrecke 8, nicht dagegen der Puffer 9 in Funktion.

Nunmehr wird durch Verschließen des Sicherheitsstreifens 36 die Palette 6 mit ihrer Ladung gesichert, aus dem Hubwerk 35 entfernt und eine neue, leere Palette wird in die in Figur 4 gezeigte Ausgangslage verfahren. Währenddessen steht der Palettenbelader 7, während der Umsetzer 4 weiter arbeitet. Die nun formierten Lagen 5 werden jedoch nicht auf dem Schubtisch 12, sondern durch den verlängerten Absetzhub (H) auf dem Schlitten 10 abgestellt, wobei der Schubtisch 12 seine rechte Endposition einnimmt. Danach wird der Schlitten 10 um ein Lagenbreite verschoben. Dieses Arbeitsspiel wiederholt sich, bis der Palettenwechsel vollzogen und der Palettenbelader 7 wieder einsatzbereit ist und die erste Lage für die neue Palette vom Schubtisch 12 oder Puffer 9 entnimmt. Nunmehr arbeitet der Palettenbelader 7 wechselweise mit dem Schubtisch 12 und dem Schlitten 10 zusammen, das heißt er nimmt wechselweise Lagen 5 von der Förderstrecke 8 und vom Puffer 9 auf. Dabei wird ausgenutzt, dass der Umsetzer 4 eine bestimmte Zeit benötigt, bis er mit der für eine komplette Lage 5 erforderlichen Anzahl von Flaschen 2 gefüllt ist. Während dieser Zeit kann der Schubtisch 12 bereits unter den Umsetzer 4 verfahren, und der Greifkopf 34 des Palettenbeladers 7 hat freien Zugang zu den Lagen 5 auf dem Schlitten 10. Sobald dieses wechselweise Abnehmen von Lagen 5 von der Förderstrecke 8 bzw. vom Puffer 9 beendet ist, werden die Lagen 5 nur noch vom Schubtisch 12 abgenommen, bis die Palette 6 vollständig befüllt ist. Danach werden in der vorbeschriebenen Weise wieder mehrere Lagen in den Puffer 9 eingesetzt.

Die erfindungsgemäße Vorrichtung ermöglicht somit bei geringem zusätzlichen Aufwand für den vertieft angeordneten Puffer 9 für vollständige Lagen 5 eine kontinuierliche Funktion der Streckblasmaschine S ohne die bisher üblichen aufwändigen Flaschenpuffer in Form von Luftförderern, Trommelspeichern, Hochregalen usw.

Der Puffer 9 kann auch auf gleicher Höhe wie die Förderstrecke 8 neben dieser angeordnet werden, wobei dann die Leistengreifer 32 und der Greifkopf 34 zum Absetzen bzw. Entnehmen der Lagen in horizontaler Richtung eine zusätzliche Bewegung ausführen müssen. Bei den heute üblichen Linear- und Roboterantrieben ist dies problemlos realisierbar. Auch für die Gestaltung des Puffers selbst sind andere Möglichkeiten denkbar; er kann z.B. kreisförmig um den Palettenbelader 7 herum angeordnet sein oder durch eine endlose Taschenkette gebildet werden.

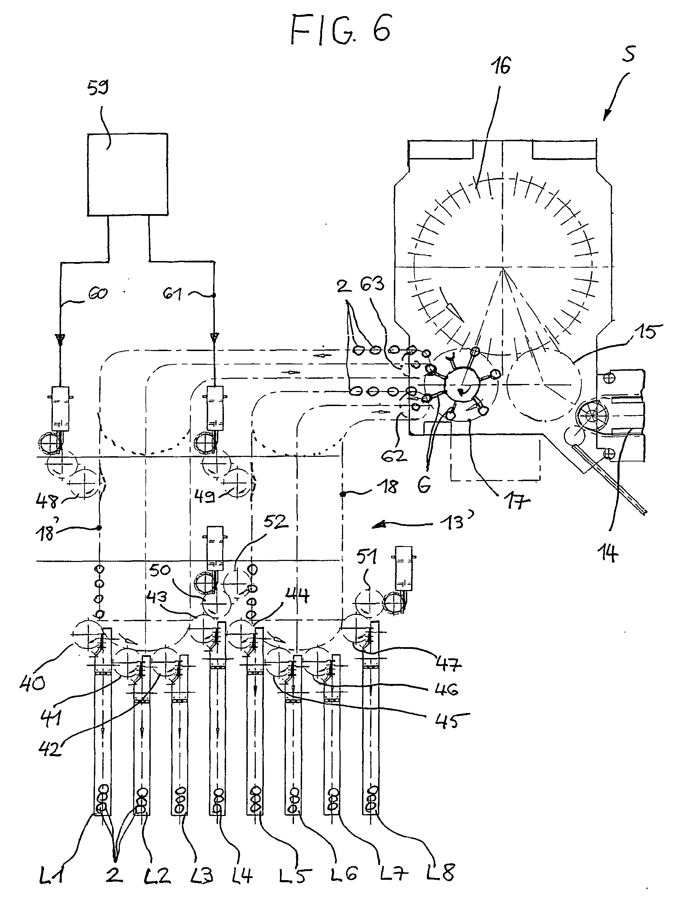

Der verteiler 13' nach Fig. 6 bis 8 weist zwei endlose Förderketten 18, 18' auf, die beide unmittelbar mit dem Auslaufstern 17 der Streckblasmaschine S synchron zusammenarbeiten. Genauer gesagt tangieren beide Förderketten 18, 18' im Umlenkungsbereich ihrer Antriebsräder 62, 63 nacheinander den Auslaufstern 17 und werden durch dessen steuerbare Greifarme G abwechselnd mit frisch geblasenen Flaschen 2 beschickt.

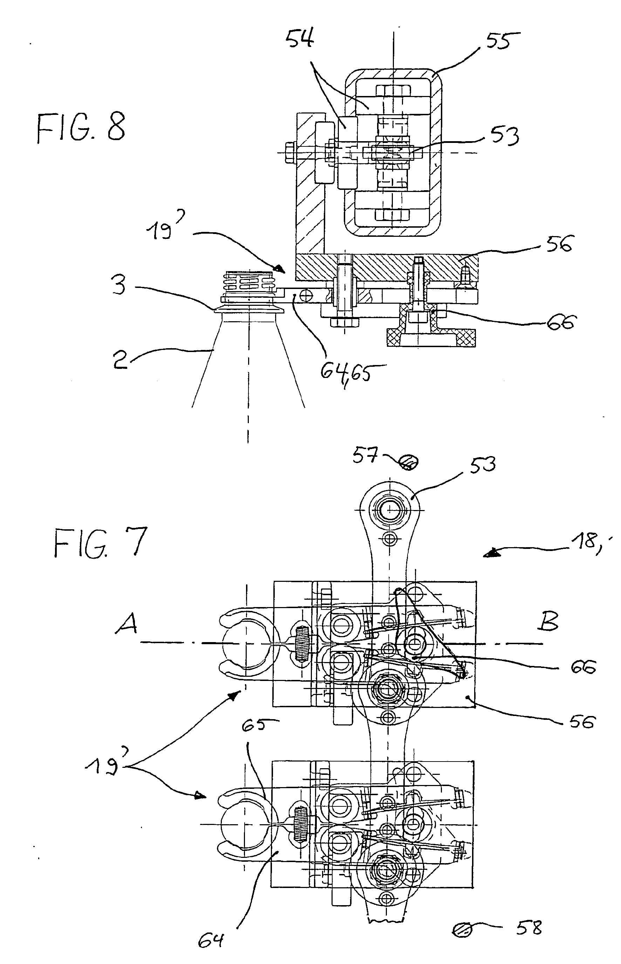

Wie in Fig. 7 und 8 zu sehen ist, weisen die beiden Förderketten 18, 18' jeweils eine endlose Gliederkette 53 auf, die mittels horizontaler und vertikaler Rollen 54 in einem C-förmigen Führungsprofil 55 mit einer seitlichen Öffnung auf einer geschlossenen Bahn geführt ist. Jede Förderkette 18, 18' trägt mittels Haltewinkel 56 eine Vielzahl einzeln steuerbarer Greifzangen 19', deren Aufbau im Detail in der europäischen Offenlegungsschrift EP 939 044 A1 beschrieben ist. Mittels stationärer Steuerbolzen 57, 58, von denen lediglich zwei gezeigt sind, können die zwei schwenkbare Greifarme 64, 65 umfassenden Greifzangen 19' an jeder beliebigen Stelle der Umlaufbahn der Förderketten 18, 18' durch Verdrehen ihrer Steuernocken 66 geöffnet bzw. geschlossen werden.

Wie die Fig. 6 zeigt, weisen beide Förderketten 18, 18' winkelförmige, ineinander geschachtelte Bewegungsbahnen auf, die an der vom Auslaufstern 17 entfernten Umlenkung einen bogenförmig gekrümmten Bahnverlauf besitzen. An diesem gekrümmten Bahnverlauf jeder Förderkette 18, 18' sind jeweils vier synchron zu den Förderketten 18, 18' rotierende Klammersterne 40 bis 47 angeordnet. Der Aufbau der Klammersterne ist im europäischen Patent EP 726 216 B2 ausführlich beschrieben. Die Klammersterne 40 bis 47 sind derart gesteuert, dass sie von der zugeordneten Förderkette 18, 18' jeweils jede vierte Flasche 2 abnehmen und in eine unmittelbar nachgeschaltete Förderbahn in Form eines Luftförderers L1 bis L8 einspeisen. Es werden somit insgesamt acht Förderbahnen gebildet, von denen jede ein Achtel der von der Streckblasmaschine S ausgestoßenen Flaschen 2 einem nicht gezeigten Umsetzer zuführt.

Im Normalbetrieb werden die beiden Förderketten 18, 18' synchron zur Streckblasmaschine S mit jeweils halber Leistung angetrieben. Der Verteiler 13' kann jedoch auch bei abgeschalteter Streckblasmaschine arbeiten. Hierzu ist jeder Förderkette 18, 18' im Umlaufbereich vor den Abnahme-Klammersternen 40 bis 47 jeweils ein synchron zur Förderkette 18, 18' antreibbarer Einschleus-Klammerstern 48, 49 zugeordnet, durch den die aus einem Silo 59 mittels Luftförderern 60, 61 oder dgl. zugeführten Flaschen 2 eingeschleust, verteilt und palettiert werden können. Dies ist zweckmäßig, wenn eine vielzahl bereits früher gefertigter Flaschen 2 palettiert werden sollen. Zwei weitere Einschleus-Klammersterne 50 und 51 sind dem jeweils vierten Abgabe-Klammerstern 43 bzw. 47 der Förderketten 18, 18' zugeordnet. Mit Hilfe der Einschleus-Klammersterne 50, 51 können diejenigen Flaschen, die bei einem Stillstand der Palettieranlage 1 bis zum verzögerten Stillstand der Streckblasmaschine S aus dieser auslaufenden fertigen Flaschen, die in einem nicht gezeigten Puffer aufgenommen werden, bei Wiederinbetriebnahme in den Verteiler 13' eingeschleust werden, wobei die Streckblasmaschine S gleichzeitig produzieren kann. Bis der nicht gezeigte Puffer geleert ist, werden die frisch produzierten Flaschen 2 durch die entsprechend gesteuerten Sterne 40 bis 42 und 44 bis 46 von den Förderketten 18, 18' abgenommen. Die Flexibilität der vorrichtung wird dadurch wesentlich erhöht.

Gleiches gilt für die durch einen weiteren Klammerstern 52 zusammen mit dem Einschleus-Klammerstern 50 gebildete Transfervorrichtung, mittels derer bei Bedarf Flaschen 2 von der Förderkette 18 zur Förderkette 18' bzw. deren Ausschleus-Klammerstern 43 transportiert werden können. Dies ist von Bedeutung, wenn eine ungerade Anzahl von beispielsweise sieben Reihen von Flaschen gebildet werden soll. Durch die Transfervorrichtung 52 kann in diesem Falle für eine gleichmäßige Beschickung aller sieben Förderbahnen gesorgt werden.

Zu erwähnen ist noch, dass durch den bogenförmigen konvexen Bahnverlauf der Förderketten 18, 18' im Bereich der Ausschleus-Klammersterne 40 bis 47 vorteilhafte Übergangsverhältnisse zwischen den Förderketten 18, 18' und den Klammersternen gebildet werden. Auch ein konkaver Bahnverlauf ist möglich, wie im Bereich der Einschleus-Klammersterne 48, 49 strichliert angedeutet ist.

Wird auf die Einschleus-Sternräder 48 bis 51 und die zugehörigen Luftförderer oder dgl. verzichtet, so kann, wie punktiert angedeutet, der bogenförmige Bahnverlauf näher an die Streckblasmaschine S herangerückt und dadurch die Länge der Förderketten 18, 18' wesentlich verkürzt werden.

## Patentansprüche

1. Vorrichtung(1)zum Palettieren von Gegenständen, insbesondere leeren Kunststoffflaschen(2) mit einem Halskragen(3), mit einem Umsetzer(4) zum Bilden von Lagen(5) aus den reihenweise zugeführten Gegenständen, einem die Lagen auf paletten(6) überführenden Palettenbelader(7), einer zwischen Umsetzer(4) und Palettenbelader angeordneten Förderstrecke(8) für die vom Umsetzer gebildeten Lagen und mit einem Puffer(9) zum Zwischenspeichern mindestens einer Lage, **dadurch gekennzeichnet, dass** der Umsetzer(4) wahlweise die Förderstrecke(8) oder den Puffer(9) mit Gegenständen(2) beschickt und der Palettenbelader(7) die Lagen von Gegenständen(2) wahlweise von der Förderstrecke(8) oder vom Puffer(9) aufnimmt.

2. Vorrichtung nach Anspruch 1, **dadurch gekennzeichnet, dass** der Puffer(9) zumindest teilweise neben der Förderstrecke(8) angeordnet ist.

3. Vorrichtung nach Anspruch 1, **dadurch gekennzeichnet, dass** der Puffer(9) zumindest teilweise unter der Förderstrecke(8) angeordnet ist.

4. Vorrichtung nach einem der Ansprüche 1 bis 3, **dadurch gekennzeichnet, dass** der Puffer(9) einen reversierbaren Schlitten(10) zur Aufnahme mindestens einer Lage(5) von Gegenständen(2) aufweist.

5. Vorrichtung nach einem der Ansprüche 1 bis 3, **dadurch gekennzeichnet, dass** der Puffer(9) mindestens eine endlose Förderkette zur Aufnahme mindestens einer Lage(5) von Gegenständen(2) aufweist.

6. Vorrichtung nach einem der Ansprüche 1 bis 3, **dadurch gekennzeichnet, dass** der Puffer(9) mindestens einen separat handhabbaren Behälter für eine Lage(5) von Gegenständen(2) aufweist.

7. Vorrichtung nach einem der Ansprüche 1 bis 6, **dadurch gekennzeichnet, dass** der Puffer(9) mit Stützen(11) für die Gegenstände(2) versehen ist.

8. Vorrichtung nach Anspruch 7, **dadurch gekennzeichnet, dass** die Stützen(11) zur Anpassung an verschiedene Gegenstandsdurchmesser verstellbar sind.

9. Vorrichtung nach einem der Ansprüche 1 bis 8, **dadurch gekennzeichnet, dass** die Förderstrecke(8) einen Schubtisch(12) für eine Lage(5) von Gegenständen(2) umfaßt, der zwischen dem normalen Abstellplatz des Umsetzers(4) und dem normalen Aufnahmeplatz des Palettenbeladers(7) verfahrbar ist.

10. Vorrichtung nach Anspruch 9, **dadurch gekennzeichnet, dass** der Puffer(9) unter dem Schubtisch(12) angeordnet ist und sowohl einen zusätzlichen Abstellplatz des Umsetzers(4) als auch einen zusätzlichen Aufnahmeplatz des Palettenbeladers (7) bestreicht.

11. Vorrichtung nach Anspruch 10, **dadurch gekennzeichnet, dass** der Umsetzer(4) und der Palettenbelader(7) wahlweise einen Zusatzhub ausführen, während dem sie die Gegenstände auf dem Puffer(9) absetzen bzw. vom Puffer(9) aufnehmen.

12. Vorrichtung nach einem der Ansprüche 1 bis 11, **dadurch gekennzeichnet, dass** dem Umsetzer (4) ein Verteiler (13) vorgeschaltet ist, der aus einer zulaufenden Reihe von Gegenständen (2) kontinuierlich mehrere ablaufende Reihen (26 bis 31) von Gegenständen (2) formiert.

13. Vorrichtung nach Anspruch 12, **dadurch gekennzeichnet, dass** der Verteiler (13) eine kontinuierlich umlaufende Förderkette (18) zur einreihigen Zufuhr der Gegenstände (2) aufweist, der mehrere synchron umlaufende Klammersterne (20 bis 25) direkt oder indirekt nachgeschaltet sind, die die Gegenstände (2) einzeln von der Förderkette (18) abnehmen und auf mehrere Bahnen (26 bis 31) verteilen.

14. Vorrichtung nach Anspruch 12, **dadurch gekennzeichnet, dass** der Verteiler (13') mehrere kontinuierlich umlaufende Förderketten (18, 18') zur jeweils einreihigen Zufuhr der Gegenstände (2) aufweist, von denen jeder mehrere Klammersterne (40 bis 47) direkt oder indirekt nachgeschaltet sind, welche die Gegenstände (2) einzeln von den Förderketten (18, 18') abnehmen und auf mehrere Bahnen (L1 bis L8) verteilen.

15. Vorrichtung nach Anspruch 14, **dadurch gekennzeichnet, dass** die Förderketten (18, 18') den Auslaufstern (17) einer Streckblasmaschine (S) tangieren und von dessen steuerbaren Greifarmen (G) abwechselnd mit Gegenständen (2) beschickt werden.

16. Vorrichtung nach einem der Ansprüche 13 bis 15, **dadurch gekennzeichnet, dass** die Förderkette(n) (18, 18') mit einzeln steuerbaren Greifzangen (19') zum gezielten Erfassen und Freigeben jeweils eines Gegenstands (2) bestückt ist (sind).

17. Vorrichtung nach einem der Ansprüche 13 bis 16, **dadurch gekennzeichnet, dass** die Förderkette(n) (18, 18') im Übergabebereich an die Klammersterne (40 bis 47) einen bogenförmig gekrümmten Bahnverlauf aufweist (aufweisen).

18. Vorrichtung nach einem der Ansprüche 13 bis 17, **dadurch gekennzeichnet, dass** mindestens einer Förderkette (18, 18') und/oder mindestens einem Klammerstern (43, 47) mindestens ein synchron antreibbarer Klammerstern (48 bis 51) zum Einschleusen von Gegenständen (2) aus einem Speicher (59) oder dgl. in die Förderkette (18, 18') bzw. in die Klammersterne zugeordnet ist.

19. Vorrichtung nach einem der Ansprüche 14 bis 18, **gekennzeichnet durch** eine Transfereinrichtung (50, 52) zum Überführen von Gegenständen (2) zwischen den Förderketten (18, 18') und/oder den diesen jeweils zugeordneten Klammersternen.

## Claims

1. Device for palletising objects, in particular empty plastics bottles (2) which have a neck collar (3), comprising a transfer device (4) for forming layers (5) from the objects which are fed in row by row, a pallet loader (7) which transfers the layers onto pallets (6), a conveying path (8) arranged between the transfer device (4) and the pallet loader for the layers formed by the transfer device, and comprising a buffer (9) for intermediate storage of at least one layer, **characterised in that** the transfer device (4) feeds optionally the conveying path (8) or the buffer (9) with objects (2) and the pallet loader (7) takes the layers of objects (2) optionally from the conveying path (8) or from the buffer (9).

2. Device according to claim 1, **characterised in that** the buffer (9) is arranged at least partially adjoining the conveying path (8).

3. Device according to claim 1, **characterised in that** the buffer (9) is arranged at least partially under the conveying path (8).

4. Device according to one of the claims 1 to 3, **characterised in that** the buffer (9) has a reversible carriage (10) for receiving at least one layer (5) of objects (2).

5. Device according to one of the claims 1 to 3, **characterised in that** the buffer (9) has at least one endless conveyor chain for receiving at least one layer (5) of objects (2).

6. Device according to one of the claims 1 to 3, **characterised in that** the buffer (9) has at least one separately usable container for a layer (5) of objects (2).

7. Device according to one of the claims 1 to 6, **characterised in that** the buffer (9) is provided with supports (11) for the objects (2).

8. Device according to claim 7, **characterised in that** the supports (11) are adjustable, to adapt to different object diameters.

9. Device according to one of the claims 1 to 8, **characterised in that** the conveying path (8) comprises a slide table (12) for a layer (5) of objects (2), said slide table being displaceable between the normal depositing site of the transfer device (4) and the normal picking-up site of the pallet loader (7).

10. Device according to claim 9, **characterised in that** the buffer (9) is arranged under the slide table (12) and sweeps over both an additional depositing site of the transfer device (4) and an additional picking-up site of the pallet loader (7).

11. Device according to claim 10, **characterised in that** the transfer device (4) and the pallet loader (7) optionally carry out an additional stroke during which they deposit the objects on the buffer (9) and/or pick them up from the buffer (9).

12. Device according to one of the claims 1 to 11, **characterised in that** arranged upstream of the transfer device (4) is a distributor (13) which, from one incoming row of objects (2), continuously forms a plurality of outgoing rows (26 to 31) of objects (2).

13. Device according to claim 12, **characterised in that** the distributor (13) comprises a continuously circulating conveyor chain (18) for single-file feeding of the objects (2), arranged directly or indirectly downstream of said conveyor chain is a plurality of synchronously circulating clamping stars (20 to 25), said clamping stars removing the objects (2) individually from the conveyor chain (18) and distributing them among a plurality of paths (26 to 31).

14. Device according to claim 12, **characterised in that** the distributor (13') has a plurality of continuously circulating conveyor chains (18, 18'), each for single-file feeding of the objects (2), arranged directly or indirectly downstream of each of said conveyor chains is a plurality of clamping stars (40 to 47), said clamping stars removing the objects (2) individually from the conveying chains (18, 18') and distributing them among a plurality of paths (L1 to L8).

15. Device according to claim 14, **characterised in that** the conveyor chains (18, 18') adjoin the outflow star (17) of a stretch blow-moulding machine (S) and are fed alternately with objects (2) by its controllable gripper arms (G).

16. Device according to one of the claims 13 to 15, **characterised in that** the conveyor chain(s) (18, 18') is/are equipped with individually controllable grippers (19'), each for targeted grasping and releasing of an object (2).

17. Device according to one of the claims 13 to 16, **characterised in that** the conveyor chain(s) (18, 18') has/have, at the region of the transition to the clamping stars (40 to 47), an arc-shaped path.

18. Device according to one of the claims 13 to 17, **characterised in that** allocated to at least one conveyor chain (18, 18') and/or at least one clamping star (43, 47) is at least one synchronously drivable clamping star (48 to 51) for feeding objects (2) from a store (59) or the like into the conveyor chain (18, 18') or into the clamping stars.

19. Device according to one of the claims 14 to 18, **characterised by** a transfer apparatus (50, 52) for transferring objects (2) between the conveyor chains (18, 18') and/or the clamping stars respectively allocated thereto.

## Revendications

1. Dispositif (1) pour palettiser des objets, notamment des bouteilles vides en matière plastique (2) présentant un collet (3), et qui comporte
- un convertisseur (4) pour former des couches (5) d'objets amenés en ligne,
- un chargeur de palettes (7) transportant les couches sur les palettes, une voie de transport (8), entre le convertisseur (4) et le chargeur de palettes, pour les couches formées par le convertisseur, et
- une zone tampon (9) pour le stockage intermédiaire d'au moins une couche,
**caractérisé en ce que**
le convertisseur (4) alimente en objets (2) soit la voie de transport (8), soit la zone tampon (9) et le chargeur de palettes (7) accueille les couches d'objets (2) provenant soit de la voie transport (8), soit de la zone tampon (9).

2. Dispositif selon la revendication 1,
**caractérisé en ce que**
la zone tampon (9) se trouve au moins en partie près de la voie de transport (8).

3. Dispositif selon la revendication 1,
**caractérisé en ce que**
la zone tampon (9) se trouve au moins en partie en dessous de la voie de transport (8).

4. Dispositif selon l'une des revendications 1 à 3,
**caractérisé en ce que**
la zone tampon (9) présente un chariot (10) réversible pour accueillir au moins une couche (5) d'objets (2).

5. Dispositif selon l'une des revendications 1 à 3,
**caractérisé en ce que**
la zone tampon (9) présente au moins une chaîne sans fin pour accueillir au moins une couche (5) d'objets (2).

6. Dispositif selon l'une des revendications 1 à 5,
**caractérisé en ce que**
la zone tampon (9) présente au moins un récipient manipulable séparément, pour une couche d'objets (2).

7. Dispositif selon l'une des revendications 1 à 6,
**caractérisé en ce que**
la zone tampon (9) est équipée de supports (11) pour les objets (2).

8. Dispositif selon la revendication 7,
**caractérisé en ce que**
les supports (11) peuvent être déplacés pour s'adapter à des diamètres d'objet différents.

9. Dispositif selon l'une des revendications 1 à 8,
**caractérisé en ce que**
pour une couche (5) d'objets (2) la voie de transport (8) comprend une table de glissement (12) qui peut se déplacer entre la place normale de stationnement du convertisseur (4) et la place normale d'accueil du chargeur de palettes (7).

10. Dispositif selon la revendication 9,
**caractérisé en ce que**
la zone tampon (9), disposée en dessous de la table de coulissement (12), couvre aussi bien une place de stationnement supplémentaire de convertisseur (4) qu'une place d'accueil supplémentaire de chargeur de palettes (7).

11. Dispositif selon la revendication 10,
**caractérisé en ce que**
le convertisseur (4) et le chargeur de palettes (7) exécutent au choix une course supplémentaire au cours de laquelle ils déchargent les objets de la zone tampon (9) ou en reçoivent.

12. Dispositif selon l'une des revendications 1 à 11,
**caractérisé en ce qu'**
en amont du convertisseur (4) est disposé un distributeur (13) qui, à partir d'une ligne d'objets (2) qui avance, forme en continu plusieurs lignes (26 à 31) d'objets.

13. Dispositif selon la revendication 12,
**caractérisé en ce que**
le distributeur (13) présente une chaîne de transport (18) tournant en continu pour amener les objets (2) disposés en une seule ligne et, directement ou indirectement en aval se trouvent plusieurs étoiles à griffes (20 à 25) qui tournent en synchronisme et qui retirent individuellement les objets (2) de la chaîne de transport (18) pour les répartir sur plusieurs voies (26 à 31).

14. Dispositif selon la revendication 12,
**caractérisé en ce que**
le distributeur (13') présente plusieurs chaînes de transport (18, 18') tournant en continu pour amener les objets (2) disposés en une seule ligne et, directement ou indirectement en aval se trouvent plusieurs étoiles à griffes (40 à 47) qui tournent en synchronisme et qui retirent individuellement les objets (2) des chaînes de transport (18, 18') pour les répartir sur plusieurs voies (L1 à L8).

15. Dispositif selon la revendication 14,
**caractérisé en ce que**
les chaînes de transport (18, 18') de l'étoile de sortie (17) sont tangentes à une machine d'étirage-soufflage (S) qui, par ses bras de saisie (G) commandables, alimente alternativement les chaînes d'objets (2).

16. Dispositif selon l'une des revendications 13 à 15,
**caractérisé en ce que**
la (les) chaîne(s) de transport (18, 18') est (sont) équipée(s) de grappins (19') commandables individuellement pour saisir de manière ciblée puis libérer chaque fois un objet (2).

17. Dispositif selon l'une des revendications 13 à 16,
**caractérisé en ce que**
la (les) chaîne(s) de transport (18, 18') dans la zone de transfert aux étoiles à griffes (40 à 47) présente(nt) un tracé en arc.

18. Dispositif selon l'une des revendications 13 à 17,
**caractérisé en ce qu'**
à au moins une chaîne de transport (18, 18') et/ou à au moins une étoile à griffes (43, 47) est associée au moins une étoile à griffes (48 à 51) entraînable en synchronisme pour faire passer des objets (2) d'un stockage (59) ou similaire à la chaîne de transport (18, 18') ou aux étoiles à griffes.

19. Dispositif selon l'une des revendications 14 à 18,
**caractérisé en ce qu'**
un dispositif de transfert (50, 52) fait passer des objets (2) de l'une à l'autre des chaînes de transport (18, 18') et/ou des étoiles à griffes qui leur sont associées.
